# EUROPEAN PATENT APPLICATION

(11) **EP 3 116 198 A1**
(43) Date of publication of application: **11.01.2017**
(21) Application number: 15306122.1
(22) Date of filing: 08.07.2015
(51) Int. Cl.: H04L 29/08

(54) **MOBILE COMMUNICATION SYSTEM, PROCESSING DISTRIBUTION UNIT, DATA PROCESSING UNIT, APPARATUS, METHODS AND COMPUTER PROGRAMS FOR DYNAMICALLY ASSIGNING COMPUTING RESOURCES FOR PROCESSING SENSOR DATA**

(71) Applicant: ALCATEL LUCENT, 92100 Boulogne-Billancourt (FR)
(72) Inventor: Grob-Lipski, Heidrun, 70435 Stuttgart (DE); Sienel, Juergen, 70435 Stuttgart (DE); Apel, Jochen, 70435 Stuttgart (DE); Jablonowski, Matthias, 70435 Suttgart (DE)
(74) Representative: 2SPL Patentanwälte PartG mbB

(57) **Abstract**

Embodiments relate to a mobile communication system (300), a processing distribution unit (10), a data processing unit (410), an apparatus (20), methods and computer programs for dynamically assigning computing resources for processing sensor data. The mobile communication system (300) comprises at least one radio access node (100) associated with a plurality of data processing units (400), at least one mobile sensor node (200) associated with the at least one radio access node (100) and configured to provide sensor data to the associated radio access node, wherein the plurality of data processing units (400) is configured to evaluate the sensor data, and a processing distribution unit (10) configured to dynamically assign, among the plurality of data processing units (400), computing resources for evaluating the sensor data.

## Description

### Technical Field

Embodiments relate to a mobile communication system, a processing distribution unit, a data processing unit, an apparatus, methods and computer programs for dynamically assigning computing resources for processing sensor data, more specifically, but not exclusively, based on transferring processing of sensor data between data processing units of a core network of the mobile communication system and data processing units of a radio access network of the mobile communication system.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for increasing the versatility of mobile communication systems are steadily increasing. As connected devices, such as smartphones, computers, or streaming devices increase the amount of data transmitted due to a more widespread use and due to demand for more high quality services, a new category of devices may use an increasing share of future mobile communication systems. The Internet of Things (IoT), which predominantly relies on Machine-to-Machine (M2M) communication, connects formerly unconnected devices, or devices connected using proprietary networks, such as mobile sensor nodes, to mobile communication systems, e.g. 4^{th} generation or 5^{th} generation mobile communication systems.

Connecting mobile sensor nodes to general purpose mobile communication system, such as e.g. 5^{th} generation mobile communication systems, may drastically increase the number of devices participating in such communication systems. As such appliances partaking in M2M communication may be located in remote areas or may be mobile, M2M may also use mobile communication systems, e.g. General Packet Radio Service (GPRS), Universal Mobile Telecommunications System (UMTS) or Long Term Evolution (LTE), e.g. to transmit sensor data.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Embodiments provide a mobile communication system, a processing distribution unit, a data processing unit, an apparatus, methods and computer programs for dynamically assigning computing resources for processing sensor data. In embodiments, mobile sensor nodes may transmit sensor data via a mobile communication system, e.g. for further processing or storage in at least one remote computer system, for storage in a data center or for evaluation of the sensor data, e.g. within the mobile communication system. For sparsely transmitted data, e.g. periodic reports of a temperature sensor, embodiments might use central data processing units, e.g. in a core network portion of the mobile communication system. For more latency sensitive data, embodiments may assign processing of the sensor data to data processing units, which are closer to the mobile sensor nodes, for example, e.g. the data processing units may be comprised in the radio access network of the mobile communication system. Embodiments may dynamically transfer the processing of the sensor data based on the occurrence of the sensor data and/or an occurrence of mobile sensor nodes providing the sensor data: For example, in a scenario wherein the mobile sensor nodes are comprised in vehicles, and sensor data is transmitted more frequently due to a traffic jam or an accident, embodiments may dynamically transfer evaluating, aggregating or handling of the sensor data to processing units comprised in the radio access network, e.g. as part of a base station associated with the mobile sensor nodes, e.g. to reduce a network load, improve latency and exploit a local scope of the sensor data. In embodiments, the data processing units might e.g. warn arriving drivers of the traffic incident, e.g. either directly from a data processing unit in the radio access network or centralized, based on aggregated sensor data.

Embodiments provide a mobile communication system. The mobile communication system comprises at least one radio access node associated with a plurality of data processing units. The mobile communication system further comprises at least one mobile sensor node associated with the at least one radio access node. The mobile sensor node is configured to provide sensor data to the associated radio access node. The plurality of data processing units is configured to evaluate the sensor data. The mobile communication system further comprises a processing distribution unit configured to dynamically assign, among the plurality of data processing units, computing resources for evaluating the sensor data. Embodiments may enable a dynamic transfer and evaluation of sensor data based on the dynamic assignment, e.g. based on latency requirements of sensor data or to exploit a local scope of sensor data. Embodiments may be used to dynamically load balance the evaluation of the sensor data through the dynamic assignment and/or to dynamically assign the computing resources to react to changes in the frequency and/or occurrence of the sensor data.

In at least some embodiments, the mobile communication system may comprise a core network and a radio access network. The plurality of data processing units may comprise at least one first data processing unit comprised in the core network and at least one second data processing unit comprised in the radio access network. The processing distribution unit may be further configured to assign the computing resources by transferring the evaluation of the sensor data between the at least one first data processing unit and the at least one second data processing unit. Embodiments may enable a dynamic transfer and evaluation of sensor data between processing in the core network and processing in the radio access network based on the dynamic assignment, e.g. based on latency requirements of sensor data or to exploit a local scope of sensor data. Embodiments may further reduce network traffic, e.g. by evaluating or pre-processing sensor data in the radio access network of the mobile communication system. Embodiments may be used to dynamically load balance the evaluation of the sensor data through the dynamic assignment and/or to dynamically assign the computing resources to react to changes in the frequency and/or occurrence of the sensor data.

In various embodiments, the processing distribution unit may be configured to determine routing information for the sensor data based on the assignment of the computing resources. By providing routing information, embodiments may reduce processing and forwarding of the sensor data, reduce a complexity of the processing distribution unit and may reduce a latency of the evaluation.

The processing distribution unit may be further configured to assign the computation resources based on at least one element of the group of information related to a quantity of the sensor data, information related to a frequency of the sensor data, information related to a status of the sensor data, and information related to a type of the sensor data. Dynamically assigning and transferring of the evaluation of the sensor data based on such data may enable a situation-dependent processing of the sensor data.

In various embodiments, the plurality of data processing units may be configured to anonymize and/or to aggregate the sensor data. Anonymizing the sensor data may increase a privacy of the mobile sensor nodes. Aggregating the sensor data may reduce an amount of data being transmitted e.g. between the radio access network and the core network and may facilitate processing of the data at the target, e.g. in the core network.

In at least some embodiments, the at least one second data processing unit may be configured to evaluate the sensor data to determine pre-processed sensor data. The at least one second data processing unit may be configured to forward the pre-processed sensor data to the at least one first data processing unit for further processing. Pre-processing the sensor data may reduce an amount of data being transmitted e.g. between the radio access network and the core network and may facilitate final processing of the data at the target, e.g. in the core network.

In various embodiments, a latency between the at least one radio access node and the at least one second data processing unit may be lower than a latency between the at least one radio access node and the at least one first data processing unit. The processing distribution unit may be configured to assign the computing resources based on the latency between the at least one radio access node and the at least one first data processing unit and/or the at least one second data processing unit. Assigning the evaluation of the sensor data based on latency may enable embodiments to use load balancing, and may enable embodiments to provide low-latency handling of sensor data in situations with low latency tolerance, e.g. in car accidents or traffic jams.

In various embodiments, the processing distribution unit may be configured to dynamically assign the computing resources based on sensor data evaluation decision information comprised in the information related to the sensor data. The sensor data evaluation decision information may comprise decision information related to an evaluation of the sensor data by the at least one first data processing unit or by the at least one second data processing unit. Using the sensor data evaluation decision information, instead of processing the sensor data or information related to the sensor data in the processing distribution unit, may reduce a complexity and/or bandwidth requirement of the processing distribution unit and may enable a modularity of the assignment decision within the mobile communication system.

In at least some embodiments, the processing distribution unit may be configured to dynamically assign the computing resources based on a latency requirement of the sensor data and/or based on a local scope of the sensor data. Assigning the evaluation of the sensor data based on latency may enable embodiments to use load balancing, and may enable embodiments to provide low-latency handling of sensor data in situations with low latency tolerance, e.g. in car accidents or traffic jams. Assigning the computing resources based on a local scope of the sensor data may further reduce latency and may enable a situation-aware local handling of sensor data, e.g. in traffic jams, localized catastrophes (e.g. earthquakes) etc.

In various embodiments, the processing distribution unit may be configured to dynamically assign the computing resources based on a load balancing of the processing resources used to evaluate the sensor data. Load-balancing may enable a more efficient use of available processing resources and may decrease an average latency of the evaluation.

In various embodiments, the at least one second data processing unit may be further configured to determine sensor response information based on the sensor data. In at least some embodiments, the at least one second data processing unit may be further configured to provide the sensor response information to at least one node of the mobile communication system. Determining sensor response information in the radio access network may decrease a latency of a provision of the sensor response information.

In at least some embodiments, the at least one mobile sensor node may be comprised in at least one vehicle. The sensor data may correspond to at least one element of the group of movement data of the at least one vehicle, vehicle-to-vehicle distance data of the at least one vehicle, position data of the at least one vehicle, navigation data of the at least one vehicle, security assistance data of the at least one vehicle, and temperature data of the at least one vehicle. The plurality of data processing units may be configured to evaluate, analyze and/or aggregate the sensor data. Dynamically assigning processing resources for the evaluation of vehicular sensor data may enable an adaptation of the evaluation of the sensor data on a current situation, e.g. in case of sensor data indicating a traffic jam or accident.

In various embodiments, the processing distribution unit may be configured to determine an increase in an amount of sensor data provided to one access node. The processing distribution unit may be configured to assign the at least one second data processing unit to filter and/or aggregate the sensor data and provide the filtered and/or aggregated sensor data to the at least one first data processing unit if the increased amount surpasses a threshold. The at least one first data processing unit may be configured to determine information related to a traffic occurrence based on the filtered and/or aggregated sensor data. The at least one first data processing unit may be configured to provide traffic occurrence warning information to at least one node of the mobile communication system. Dynamically adjusting an assignment of the evaluation of the sensor data based on an increase in the amount of sensor data, which may indicate a traffic incident, such as an accident or a traffic jam, may enable a localized handling of the incident, may decrease a latency (e.g. of the traffic warning), and may decrease an amount of data transmitted to the at least one first data processing unit.

Embodiments further provide a processing distribution unit for a mobile communication system. The mobile communication system further comprises at least one radio access node associated with a plurality of data processing units. The mobile communication system further comprises at least one mobile sensor node associated with the at least one radio access node. The at least one mobile sensor node is configured to provide sensor data to the associated radio access node. The mobile communication system further comprises the plurality of data processing units to evaluate the sensor data. The processing distribution unit comprises an interface configured to obtain information related to the sensor data. The processing distribution unit further comprises a control module configured to dynamically assign, among the plurality of data processing units, computing resources for evaluating the sensor data based on the information related to the sensor data. Embodiments may enable a dynamic transfer and evaluation of sensor data based on the dynamic assignment, e.g. based on latency requirements of sensor data or to exploit a local scope of sensor data. Embodiments may be used to dynamically load balance the evaluation of the sensor data through the dynamic assignment and/or to dynamically assign the computing resources to react to changes in the frequency and/or occurrence of the sensor data.

Embodiments further provide a data processing unit of a plurality of data processing units for evaluating sensor data in a mobile communication system. The mobile communication system further comprises at least one radio access node associated with the plurality of data processing units. The mobile communication system further comprises at least one mobile sensor node associated with the at least one radio access node and configured to provide sensor data to the associated radio access node. The mobile communication system further comprises the plurality of data processing units to evaluate the sensor data. The data processing unit comprises an input configured to obtain the sensor data and at least one output. The data processing unit further comprises a control module configured to evaluate the sensor data and to provide the evaluated sensor data using the at least one output. The data processing unit is dynamically selected by a processing distribution unit among the plurality of data processing units to provide computing resources to evaluate the sensor data. Embodiments may enable a dynamic transfer and evaluation of sensor data based on the dynamic assignment, e.g. based on latency requirements of sensor data or to exploit a local scope of sensor data. Embodiments may be used to dynamically load balance the evaluation of the sensor data through the dynamic assignment and/or to dynamically assign the computing resources to react to changes in the frequency and/or occurrence of the sensor data.

Embodiments further provide an apparatus for providing sensor data evaluation decision information. The apparatus comprises an input configured to obtain the sensor data and an output configured to provide the sensor data evaluation decision information. The apparatus further comprises a control module configured to determine the sensor data evaluation decision information. The sensor data evaluation decision information comprises decision information related to an evaluation of the sensor data by a at least one first data processing unit comprised in a core network of a mobile communication system or by a at least one second data processing unit comprised in a radio access network of the mobile communication system. The control module is configured to determine the sensor data evaluation decision information based on at least one element of the group of information related to a quantity of the sensor data, information related to a frequency of the sensor data, information related to a status of the sensor data, and information related to a type of the sensor data. Providing the sensor data evaluation decision information, instead of processing the sensor data or information related to the sensor data in the processing distribution unit, may reduce a complexity and/or bandwidth requirement of the processing distribution unit and may enable a modularity of the assignment decision within the mobile communication system.

Embodiments further provide a method for a mobile communication system. The mobile communication system comprises at least one radio access node associated with a plurality of data processing units. The mobile communication system further comprises at least one mobile sensor node configured to provide sensor data to the associated radio access node. The mobile communication system further comprises the plurality of data processing units to evaluate the sensor data. The method comprises obtaining information related to the sensor data. The method further comprises dynamically assigning, among the plurality of data processing units, computing resources for evaluating the sensor data based on the information related to the sensor data.

Embodiments further provide a method for a data processing unit of a plurality of data processing units for evaluating sensor data in a mobile communication system. The mobile communication system further comprises at least one radio access node associated with the plurality of data processing units. The mobile communication system further comprises at least one mobile sensor node associated with the at least one radio access node and configured to provide sensor data to the associated radio access node. The mobile communication system further comprises the plurality of data processing units to evaluate the sensor data. The method comprises obtaining the sensor data from the at least one mobile sensor node. The method further comprises evaluating the sensor data. The method further comprises providing the evaluated sensor data. The data processing unit is dynamically selected by a processing distribution unit among the plurality of data processing units to provide computing resources to evaluate the sensor data.

Embodiments further provide a method for providing sensor data evaluation decision information. The method comprises obtaining the sensor data. The method further comprises determining the sensor data evaluation decision information based on at least one element of the group of information related to a quantity of the sensor data, information related to a frequency of the sensor data, information related to a status of the sensor data, and information related to a type of the sensor data. The sensor data evaluation decision information comprises decision information related to an evaluation of the sensor data by a at least one first data processing unit comprised in a core network of a mobile communication system or by a at least one second data processing unit comprised in a radio access network of the mobile communication system. The method further comprises providing the sensor data evaluation decision information.

Embodiments further provide a method for a mobile communication system. The method comprises associating at least one radio access node with a plurality of data processing units. The method further comprises associating at least one mobile sensor node with the at least one radio access node. The method further comprises providing sensor data to the associated radio access node. The method further comprises dynamically assigning, among the plurality of data processing units, computing resources for evaluating the sensor data. The method further comprises evaluating the sensor data.

A further embodiment is a computer program product comprising a computer readable medium having computer readable program code embodied therein, the computer readable program code being configured to implement one of the above methods when being loaded on a computer, a processor, or a programmable hardware component.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a mobile communication system;
Fig. 2 illustrates a block diagram of an embodiment of the mobile communication system comprising a core network and a radio access network;
Fig. 3 illustrates a distributed cloud infrastructure in a mobile communication system;
Fig. 4 illustrates a distributed cloud infrastructure in a mobile communication system;
Fig. 5 illustrates a traffic jam warning as an exemplary embodiment;
Fig. 6 illustrates a block diagram of an embodiment of a processing distribution unit for a mobile communication system;
Fig. 7 illustrates a block diagram of an embodiment of a data processing unit of a plurality of data processing units;
Fig. 8 illustrates a block diagram of an embodiment of an apparatus for providing sensor data evaluation decision information;
Fig. 9 shows a flowchart of an embodiment of a method for a mobile communication system;
Fig. 10 shows a flowchart of an embodiment of a method for a data processing unit of a plurality of data processing units;
Fig. 11 shows a flowchart of an embodiment of a method for providing sensor data evaluation decision information; and
Fig. 12 shows a flowchart of an embodiment of a method for a mobile communication system.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may relate to the field of mobile sensors, which may collect environmental and other information. These sensors may e.g. transmit information to other entities which are capable to correlate data from multiple sensors or a time series of a single sensor in order to retrieve higher order information. A typical example of such a sensor might be a thermal sensor which sends every minute a message of min and max values metered in the last period. Another exemplary set of sensors might be deployed in vehicles and collect information like position, speed, heading etc. Higher level logic might determine from multiple individual messages e.g. if the temperature in given environment is normal (no deviation in time and space) or detect situations like traffic jams by correlating data sets from different cars together with additional information sources like road maps.

Multiple sensors or mobile sensor nodes in a vehicle, which may be connected to a common communication module that connects the sensors to the mobile communication system 300, and may be comprised in the vehicle's OnBoard Unit (OBU), might send data messages to a compute instance typically using a mobile network infrastructure. Current sensor networks may use simplistic radio access technology in a specialized sensor network. With upcoming 5G Radio Access Network (RAN) technology, mobile sensors might be supported by common mobile network standards.

In conventional systems, computing of sensor data may be performed at one location in the network, e.g. in a data-center deployed by the car manufacturer, the application provider or servers located in the core of the network provider or in the public cloud. Sensor data may have to travel long distances until they can be processed and individual data connections may be established between the sensors and the processing facilities even if multiple sensors are located in the same cell of the mobile network. In cases where automated processes depend on realtime processing functions and a direct coupling between sensors and actuators, a low end-to-end latency may be a critical factor. Furthermore, in the case of mobile sensors, movement of the sensors between different cells may become problematic.

Conventional mobile networks might not offer such in-network processing of sensor data for different reasons:
▪ There might not be compute support for applications in the access nodes
▪ Using Internet Protocol (IP) as communication protocols for sensor nodes may require a pre-defined address of a data processing unit (or at least an anycast address) to which the data is sent
▪ In conventional systems, no dedicated model for a distributed processing might exist that allows identification and processing of data which supports data to be correlated and provided to higher layer processing.

Conventional car-to-x (x=car, roadside unit or infrastructure) may be based on ad-hoc networking, e.g. dedicated short range communication, or might be based on Wireless Local Access Network (WLAN) techniques (e.g. IEEE 1609.1-4 and 802.11p) and may require dedicated communication modules, which may detect potential communication partners in reach on the fly. Conventional systems might not allow automatic infrastructure driven handover like mobile radio networks (e.g. Long Term Evolution, LTE).

LTE may provide a pre-defined handover procedure and may produce high end-to-end latencies, as all data might be routed to the centralized data centers. Data collected from sensors in the car (like gyro-sensors, compass, Traction Control System (TCS), etc.) might be used for multiple purposes.

Conventional mobile communication system might not provide means for distributed cloud facilities with the associated processing functionality, thus no data aggregation and processing in the radio access network or the edge of a network might be possible.

Embodiments may provide in-network processing nodes and distributed service modules together with an intelligent network attachment, which may overcome the limitations of conventional systems by leveraging the processing between access nodes and back-end servers.

Processing modules (e.g. data processing units) might be assigned evaluation of the sensor data at the right location to process and aggregate information, e.g. before it is batch-transmitted to the centralized data-center. Individual data from the messages might be correlated and preprocessed, e.g. already in the access nodes or in data processing units associated with the access nodes of the mobile communication system. This may enable a more efficient use of the network resources and offloading of sensor data evaluation to edge locations, which may result in low latencies and protection of personal data.

Mobile sensor nodes might transmit their data using specific data channels (e.g. time, frequency or modulation resources or contention based channels) and a sensor identifier. In the access node the data channels might be mapped to services which process the specific data. Routing rules might forward the sensor data to the nearest location of a processing end-point.

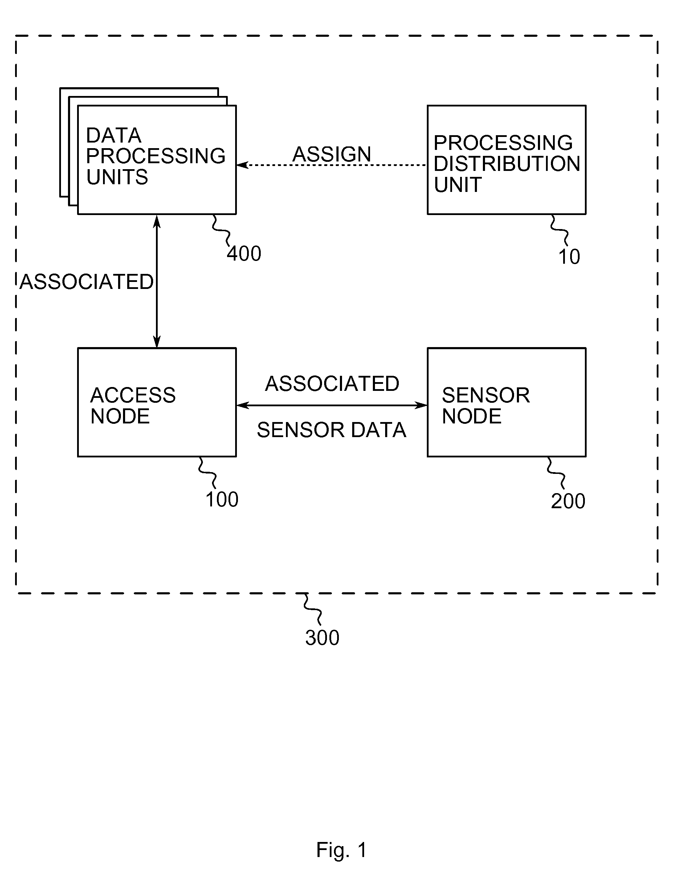

Fig. 1 illustrates a block diagram of an embodiment of a mobile communication system 300. The mobile communication system 300 comprises at least one radio access node 100 associated with a plurality of data processing units 400.

The mobile communication system 300 further comprises at least one mobile sensor node 200 associated with the at least one radio access node 100. The mobile sensor node 200 is configured to provide sensor data to the associated radio access node.

In general, the mobile communication system 300 may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver, e.g. the radio access node 100, can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells.

A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology. In at least some embodiments, the at least one mobile sensor node 200 may correspond to a mobile transceiver comprising a sensor component, and/or the mobile sensor node may be connected to a mobile transceiver and communicate via the mobile transceiver.

In at least some embodiments, the at least one mobile sensor node 200 may comprise one or more sensor modules e.g. at least one element of the group of a localization module (e.g. based on the Global Positioning System, GPS), a movement detection module, a gyroscope, an accelerometer, a temperature sensor, a seismometer, a pressure sensor, an environmental sensor, a vehicle sensor, and a sensor monitoring runtime operations of an electronic device. The at least one mobile sensor node may further comprise a communication module, e.g. a mobile transceiver, a transceiver component, or a client component of the mobile communication system 300. In at least some embodiments, two or more sensor components may share one communication module. In at least some embodiments, the sensor data may comprise at least one element of the group of location information, movement information, velocity information, acceleration information, altitude information, seismic information, temperature information, pressure information, environmental information, humidity information, vehicle status information, electronic device runtime information, and mobile communication system channel information. In at least some embodiments, the sensor data may correspond to payload and/or header data of data packets provided by the at least one mobile sensor node 200.

A base station transceiver can be located in the fixed or stationary part of the network or system. A base station transceiver, e.g. the radio access node 100, may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit. In at least some embodiments, the radio access node 100 may correspond to a base station transceiver, a remote radio head and/or an access point, for example according to the 802.11 WLAN standard.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

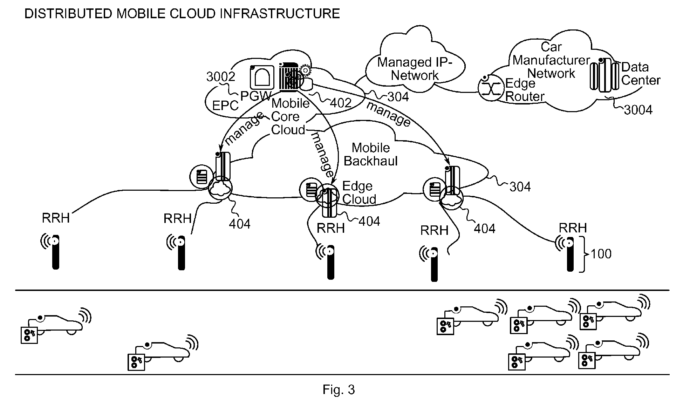

The data processing units 400 are configured to evaluate the sensor data. In at least some embodiments, a data processing unit, e.g. a data processing unit 410 as introduced subsequently, of the plurality of data processing units 400 may correspond to or comprise at least one element of the group of a virtual appliance, a cloud appliance, a software appliance, a virtual machine, a cloud software, a hypervisor, a cloud software middleware, an analysis software, and a processing module. An association of the plurality of data processing units 400 with the at least one radio access node 100 may correspond to a fixed or variable assignment of a data processing unit of the plurality of data processing units 400 to a radio node, e.g. based on an intelligent attachment function as described in Fig. 3-5. In an implementation, a data processing unit might for example be connected or directly connected to the associated radio access node using a high bandwidth connection, e.g. using a fiber channel connection. In at least some embodiments, a data processing unit might for example be connected to the associated radio access node using a virtual network connection based on the dynamic or static association, e.g. based on a dynamic assignment as will be introduced subsequently. In at least some embodiments, the at least one access node 100 may comprise the associated data processing unit or units of the plurality of data processing units 400, or may be located in close proximity. In at least some embodiments, a data processing unit of the plurality of data processing units 400 might be associated with one or more radio access nodes, and a radio access node might be associated with one or more data processing units of the plurality of data processing units 400. In at least some embodiments, the plurality of data processing units 400 may be configured to anonymize and/or to aggregate the sensor data. The plurality of data processing units 400 might for example be configured to remove information related to the mobile sensor node that provided the sensor data from the sensor data, or aggregate sensor data provided by different mobile sensor nodes and/or perform pre-processing (e.g. averaging, counting, extreme value extraction) on the sensor data provided by different mobile sensor nodes to anonymize the data. The plurality of data processing units 400 might for example be configured to aggregate sensor data provided by the same mobile sensor node or might be configured to aggregate sensor data provided by two or more mobile sensor nodes.

The mobile communication system further comprises a processing distribution unit 10 configured to dynamically assign, among the plurality of data processing units 400, computing resources for evaluating the sensor data.

In at least some embodiments, the dynamic assignment of the computing resources may correspond to a non-static and/or time-variant assignment of the computing resources based on at least one element of the group of information related to a quantity of the sensor data, information related to a frequency of the sensor data, information related to a status of the sensor data, and information related to a type of the sensor data. The quantity of the sensor data may correspond to a quantity of data packets of sensor data, to a quantity of data comprised in a data packet of sensor data, or to a quantity of distinct mobile sensor nodes transmitting sensor data, for example. The frequency of the sensor data may correspond to a rate of data packets comprising sensor data are received within a specified time frame, or to a rate or frequency of data units comprised in the sensor data, for example. The type of the sensor data may correspond to a type of a content of the payload of sensor data, e.g. if the mobile sensor node is configured to provide different types of content, e.g. status information and measurement information based on a status of the mobile sensor node or the status of the sensor data. The status of the sensor data may correspond to whether the sensor data indicates a normal condition or an exceptional condition of the sensor, e.g. to whether a temperature limit has been surpassed, indicating a fire, or to whether a seismic activity surpasses a threshold. The dynamic assignment may change dynamically based on a change of the information upon which the assignment is based, and may change during the evaluation of sensor data or between the evaluation of packets of the sensor data. The dynamic assignment may correspond to a situation-dependent and/or requirement-driven assignment based on the sensor data and/or properties of the sensor data. The processing distribution unit 10 may be configured to transfer the processing of sensor data between data processing units of the plurality of data processing units 400 during runtime. For example, the processing distribution unit 10 may be configured to affect a transfer or migration of an execution facility, e.g. a virtual machine, evaluating the sensor data between data processing units of the plurality of data processing units 400 during runtime based on the dynamic assignment. In at least some embodiments, the processing distribution unit 10 may be configured to affect a transfer of preliminary results and/or runtime information between data processing units of the plurality of data processing units 400 during runtime based on the dynamic assignment. In at least some embodiments, the computing resources may correspond to computing resources of a virtual machine hypervisor or host, to computing resources in a stream computing system, to computing resources of a general purpose computer, to computing resources of a digital signal processor, and/or to computing resources of a distributed computing system.

In at least some embodiments, the processing distribution unit 10 might be configured to determine routing information for the sensor data based on the assignment of the computing resources. In various embodiments, the at least one radio access node 100 may be configured to adapt routing instructions of the sensor data based on the routing information and/or to forward the sensor data based on the routing information. The routing information may comprise information related to one or more routes for the sensor data and/or information related to one or more destination addresses for the sensor data, e.g. one or more routes to and/or destination addresses of data processing units assigned by the processing distribution unit 10.

In embodiments the processing distribution unit 10 may be implemented using one or more processing units, one or more processing devices, any means for processing, such as a processor, a computer or a programmable hardware component being operable with accordingly adapted software. In other words, the described function of the processing distribution unit 10 may as well be implemented in software, which is then executed on one or more programmable hardware components. Such hardware components may comprise a general purpose processor, a Digital Signal Processor (DSP), a micro-controller, etc. As can be seen from Fig. 1, the at least one mobile sensor node 100 is coupled with the at least one access node 200, and the at least one access node is coupled to the plurality of data processing units.

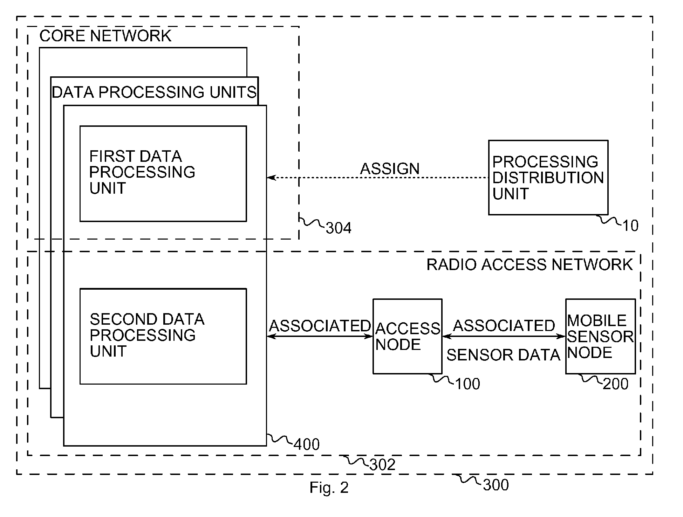

Fig. 2 illustrates a block diagram of another embodiment of the mobile communication system 300. The mobile communication system 300 may comprise a core network 302 and a radio access network 304. In at least some embodiments, the Core Network 302 (CN) may correspond to a Core Network of an UMTS mobile communication system, an Evolved Packet Core of an LTE mobile communication system or corresponding entities in 5^{th}-generation or later mobile communication systems. The Radio Access Network 304 (RAN) may correspond to an UMTS Radio Access Network (UTRAN), an LTE high speed and low latency radio access network (E-UTRAN) or corresponding entities in a 5^{th}-generation or later mobile communication system.

The plurality of data processing units 400 may comprise at least one first data processing unit 402 comprised in the core network 302. The plurality of data processing units 400 may comprise at least one second data processing unit 404 comprised in the radio access network 304. The processing distribution unit 10 may be configured to assign the computing resources by transferring the evaluation of the sensor data between the at least one first data processing unit 402 and the at least one second data processing unit 404. For example, the processing distribution unit 10 may be configured to affect a transfer or migration of a virtual machine evaluating the sensor data between data processing units of the plurality of data processing units 400 during runtime based on the dynamic assignment to transfer the evaluation. In at least some embodiments, the processing distribution unit 10 may be configured to affect a transfer of preliminary results and/or runtime information between data processing units of the plurality of data processing units 400 during runtime based on the dynamic assignment to transfer the evaluation.

In various embodiments, the at least one second data processing unit 404 may configured to evaluate the sensor data to determine pre-processed sensor data. The at least one second data processing unit 404 may be configured to forward the pre-processed sensor data to the at least one first data processing unit 402 for further processing. In at least some embodiments, the at least one second data processing unit 404 may be configured to aggregate, average, extract extremes, correlate and/or anonymize the sensor data for the pre-processed sensor data, for example.

In various embodiments, a latency between the at least one radio access node 100 and the at least one second data processing unit 404 may be lower than a latency between the at least one radio access node 100 and the at least one first data processing unit 402. The latency may for example correspond an average latency, a statistical latency, and/or a maximum latency (e.g. based on a statistical confidence). The latency may correspond to a transmission latency and/or to a processing latency (processing time and/or waiting/queuing time) of the corresponding data processing unit. The processing distribution unit 10 may be configured to assign the computing resources based on the latency between the at least one radio access node 100 and the at least one first data processing unit 402 and/or the at least one second data processing unit 404. The processing distribution unit 10 may be configured to transfer the evaluation of the sensor data to the at least one second data processing unit 404 if a latency requirement of the sensor data requires a processing of the sensor data in the radio access network, for example. In various embodiments, the processing distribution unit 10 may be configured to dynamically assign the computing resources based on a latency requirement of the sensor data. The latency requirement may correspond to an upper boundary of an evaluation time or to an upper boundary of a combined evaluation and response time for sensor data, and may change dynamically based on the sensor data (e.g. based on the quantity, frequency, type or status of the sensor data).

In at least some embodiments, the processing distribution unit 10 may be configured to dynamically assign the computing resources based on sensor data evaluation decision information comprised in the information related to the sensor data. The sensor data evaluation decision information may comprise decision information related to an evaluation of the sensor data by the at least one first data processing unit 402 or by the at least one second data processing unit 404. In at least some embodiments, the sensor data evaluation decision information may be based on or comprise at least one element of the group of information related to a quantity of the sensor data, information related to a frequency of the sensor data, information related to a status of the sensor data, and information related to a type of the sensor data. In various embodiments, the sensor data evaluation decision information may comprise binary decision information indicating whether to evaluate the sensor data in the CN 302 or the RAN 304.

In various embodiments, the processing distribution unit 10 may be configured to dynamically assign the computing resources based on a local scope of the sensor data. In embodiments, the local scope of the data may correspond to sensor data determined at a position or within a region, wherein the sensor data is influenced by the position or region, e.g. seismic activity within a region or traffic activity within a limited stretch of a road (e.g. sensor data indicating a traffic jam). The processing distribution unit 10 may be configured to assign the computing resources to exploit the local scope of the data, e.g. to decrease a latency of a response or to evaluate data that is relevant to a location or region, but less relevant for the entire mobile communication system (e.g. a traffic jam).

In various embodiments, the processing distribution unit 10 may be configured to dynamically assign the computing resources based on a load balancing of the processing resources used to evaluate the sensor data. The processing distribution unit 10 might for example distribute the evaluation of the sensor data to decrease an average evaluation time for the sensor data and/or avoid a locally increased evaluation time. The evaluation time may correspond to an amount of time required for queueing and processing of sensor data by a data processing unit, and may depend on a load and/or a processing power of the data processing unit.

In various embodiments, the at least one second data processing unit 404 may be further configured to determine sensor response information based on the sensor data, and to provide the sensor response information to at least one node of the mobile communication system 300. In at least some embodiments, the sensor response information may correspond to feedback information or instruction information determined by the second data processing unit 404 based on the sensor data, e.g. to provide feedback on the sensor data, provide a warning based on the sensor data etc., e.g. of an impending traffic jam. In embodiments, the at least one node may comprise the mobile sensor node that provided the sensor data upon which the sensor response information is based, other or all mobile sensor nodes connected to the mobile communication system 300, e.g. a vehicle OBU of a vehicle comprising a mobile sensor node, and/or other network nodes of the mobile communication system 300, e.g. mobile transceivers, smartphones, OBUs of vehicles, road side units, connected presentation screens, base station transceivers, and/or sensor response aggregation units.

In an exemplary embodiment, the at least one mobile sensor node 200 may be comprised in at least one vehicle. The sensor data may correspond to at least one element of the group of movement data of the at least one vehicle, vehicle-to-vehicle distance data of the at least one vehicle, position data of the at least one vehicle, navigation data of the at least one vehicle, security assistance data of the at least one vehicle, and temperature data of the at least one vehicle. The plurality of data processing units 400 may be configured to evaluate, analyze and/or aggregate the sensor data.

In various embodiments, the processing distribution unit 10 may be configured to determine an increase in an amount of sensor data provided to one access node. The processing distribution unit 10 may be configured to assign the at least one second data processing unit 404 to filter and/or aggregate the sensor data and provide the filtered and/or aggregated sensor data to the at least one first data processing unit 402 if the increased amount surpasses a threshold. The increased amount may correspond to an increase of sensor data being provided per mobile sensor node and/or an increase of mobile sensor nodes providing the sensor data. The filtered and/or aggregated sensor data may correspond to the pre-processed sensor data, for example. The at least one second data processing unit 404 may be configured to filter the sensor data by sensor data status for example, and/or based on a lower and/or upper threshold. In at least some embodiments, the threshold may be pre-defined, and/or may correspond to an amount of sensor data, above which a certain condition, e.g. a traffic condition, a traffic jam etc., may be assumed.

The at least one first data processing unit 402 may be configured to determine information related to a traffic occurrence based on the filtered and/or aggregated sensor data. The at least one first data processing unit 402 may be configured to provide traffic occurrence warning information to at least one node of the mobile communication system 300. In at least some embodiments, the traffic occurrence may correspond to at least one element of the group of a traffic jam, an accident, a road impediment, and a deteriorated road. The at least one node may comprise at least one element of the group of a mobile sensor node, a mobile transceiver, a sensor response aggregation unit, a sensor response distribution unit, and an OBU of a vehicle connected to the mobile communication system 300.

As can be seen from Fig. 2, the at least one mobile sensor node 100 is coupled with the at least one access node 200, and the at least one access node is coupled to the plurality of data processing units.

More details and aspects of the mobile communication system 300 (e.g. at least one radio access node 100, plurality of data processing units 400, at least one mobile sensor node 200, evaluation of sensor data, processing distribution unit 10, dynamic assignment, computing resources, sensor data, quantity, frequency, type, status of the sensor data) are mentioned in connection with the proposed concept or one or more examples described above (e.g. Fig. 1). The mobile communication system 300 may comprise one or more additional optional features corresponding to one or more aspects of the proposed concept or one or more examples described above or below.

A service may consists of several types of processing or evaluation components. Pre-processing components may collect and filter sensor data, accumulate and anonymize sensor data (by removing e.g. user specific information that is not required for a given service). Other processing/evaluation steps may also apply (e.g. image processing for camera signals). Analytics components, may correlate those aggregated information with e.g. pre-defined patterns, use it to retrieve data from a database, etc. New services might be deployed from the service creator using a portal or a marketplace. The at least one first 402 and at least one second 404 data processing unit might be used to execute the processing components.

A mobile sensor node, e.g. the at least one mobile sensor node 200 comprised in a car's On Board Unit (OBU) may connect to a mobile communication system 300. The mobile sensor nodes may announce the available information (the type of sensors, etc) using a first message to the mobile communication system 300 using a standard data channel. Based on the identity of the unit a specific channel identifier might be assigned, which might be used throughout the communication with the network even supporting mobility between base stations (which may correspond to the at least one access node 100). The mobile sensor nodes might send their data e.g. using the assigned channel identifier and their sensor id which might then be forwarded to the plurality of data processing units 400. The mobile sensor nodes may correspond to the at least one mobile sensor node 200, for example.

During execution service components (e.g. virtual machines or processing instructions for evaluating the sensor data) might be loaded into the cloud infrastructure and dynamically assigned/distributed across the cloud nodes (which may correspond to the plurality of data processing units 400), e.g. using the processing distribution unit 10. Depending on the service requirements the location of the service components might be determined.

In an exemplary embodiment, for a traffic jam warning service the computing resources for evaluating the sensor data might initially be assigned in the at least one first data processing unit 402, e.g. in centralized servers. As more requests appear, the processing distribution unit 10 may scale out, allocate more processing resources and create new instances for evaluation of the sensor data. These new instances may be placed in the at least one second data processing unit 404 in case the number of requests exceeds a pre-defined threshold, for example. Alternatively, for low-latency services (e.g. collision warnings) the location might be determined on instantiation. Embodiments may provide a more efficient use of network resources, personal data protection and individual support of applications by considering their specific service requirements, e.g. low latencies.

Fig. 3 illustrates a distributed cloud infrastructure in a mobile communication system, e.g. the mobile communication system 300. The plurality of data processing units 400, on which evaluation of the sensor data is executed may be placed close to the at least one access node 100 (e.g. base station), e.g. within the edge (covering a set of base stations in a specific region) of the RAN 304 (as at least one second data processing unit 404), and/or in the core 302 of a mobile communication system 300 e.g. a data center close to the packet gateways 3002 (as at least one first data processing unit 402). Additional resources (e.g. a public cloud infrastructure or an application providers own data-center 3004) might be connected via virtual or public networks. A centralized or distributed cloud management system might be responsible to monitor the cloud resources, manage the resources (processing, network, storage) and the services (deployment, configuration, scaling) in the infrastructure and orchestrate the services including dynamic scalability.

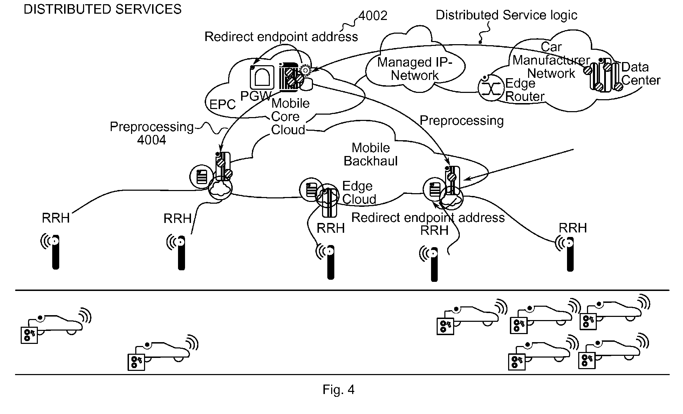

Fig. 4 illustrates how the services are deployed from the service creator. The service creator may define the different service components and load the service logic to the mobile core cloud (the at least one first data processing unit 402). During execution the evaluation of the sensor data may be redirected 4002 to the RAN 304 and the processing distribution unit 10 may distribute the evaluation to different data processing units of the at least one second data processing unit 404.

In the traffic jam warning example pre-processing components that may collect and filter data, accumulate and anonymize data (e.g. by removing e.g. user specific information that is not required for a given service) are placed in the at the at least one second data processing unit 404. Analytics components may correlate those aggregated information with e.g. pre-defined patterns, use it to retrieve data from a database, etc. They might be placed in the at the at least one first data processing unit 402 or in the at the at least one second data processing unit 404. The service component responsible to create the traffic jam warning is in this example located in the at the at least one first data processing unit 402. Further processing may comprise issuing a warning based on the analyzed sensor data.

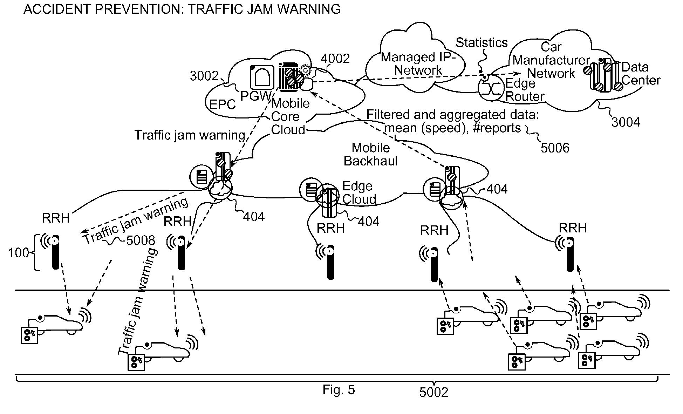

Fig. 5 illustrates a traffic jam warning as an exemplary embodiment. Service components are data collectors, extracting e.g. speed, position and direction information from the sensor data sent by the OBU, analytics modules providing statistical methods and a traffic warning generator. In at least some embodiments, service components may correspond to virtual machines configured to evaluate sensor data and/or instructions configured to evaluate sensor data, and may be executed using the plurality of data processing units 400.

At the access node close to the head of the traffic jam, the number of data packages comprising sensor data may increase. A new service instance might be started in the at least one second data processing unit 404, e.g. comprised in the access node, in order to offload procedding and network traffic from the core cloud to the edge cloud (from the at least one first data processing unit 402 to the at least one second data processing unit 404).

Sensor data (e.g., speed, position, anti-lock braking system data, traction control system data, temperature, navigational data) from the different cars 5002 may be processed and aggregated by filter components running in the at least one second data processing unit 404. Instead of individual reports a single message, covering e.g. the mean speed of all cars, aggregated sensor data 5006 comprising the number of reports and the location of the first and the last cars in the covered sector might be determined by the at least one second data processing unit 404 as pre-processed sensor data and provided to the at least one first data processing unit 402.

In the data processing units located in the core network 302 of the mobile communication system, e.g. the at least one first data processing unit 402, reports from different cells might be collected and a analytics algorithm might evaluate the length and the status of the traffic jam, e.g. how many cells are covered, if the road or single lines are blocked (indicated by no or very few moving cars in the first free cell in front of the traffic jam), etc.

A traffic jam warning 5008 might be issued to the other cells of the highway cells which might be received by other cars approaching the traffic jam, e.g. via their mobile sensor node or an OBU connected to the mobile communication system 300. In the cell previous to the affected cell, a special message might be delivered to cars running at high speed, which may enable a speed control unit to automatically reduce the speed of the approaching cars.

Embodiments are not limited by the specified traffic jam use case. Other embodiments may include collision detection, weather warning (fog, ice, aquaplaning), other sensor networks (e.g. industrial and home automation applications), etc.

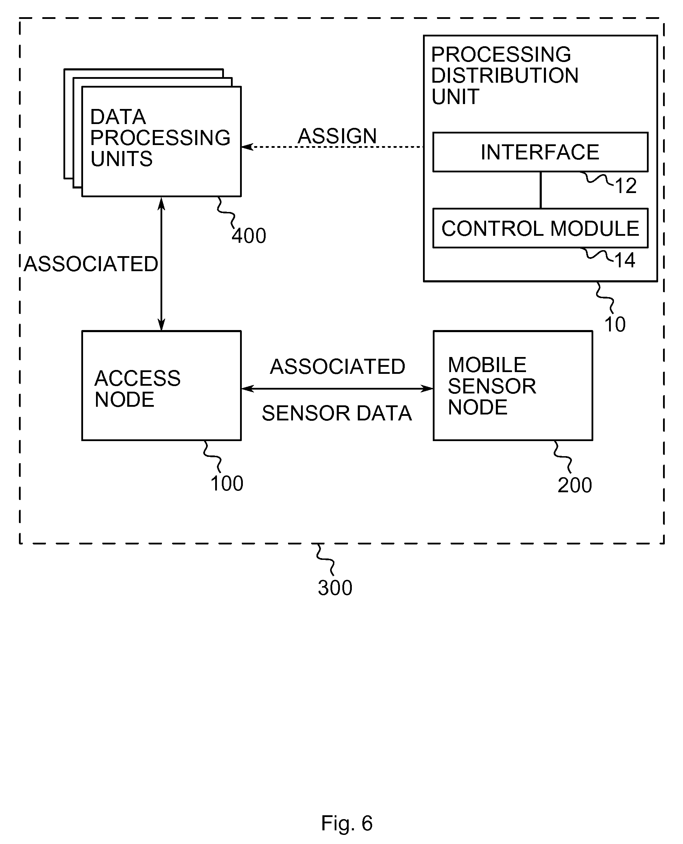

Fig. 6 illustrates a block diagram of an embodiment of a processing distribution unit 10 for a mobile communication system 300. The mobile communication system 300 further comprises at least one radio access node 100 associated with a plurality of data processing units 400. The mobile communication system 300 further comprises least one mobile sensor node 200 associated with the at least one radio access node 100. The at least one mobile sensor node is configured to provide sensor data to the associated radio access node. The plurality of data processing units 400 are configured to evaluate the sensor data. The processing distribution unit 10 comprises an interface 12 configured to obtain information related to the sensor data. The interface 12 may correspond to one or more inputs and/or outputs for receiving and/or transmitting information, which may be in digital (bit) values according to a specified code, within a module, between modules or between modules of different entities.

In at least some embodiments, the information related to the sensor data may comprise sensor data evaluation decision information and/or may be based on or comprise at least one element of the group of information related to a quantity of the sensor data, information related to a frequency of the sensor data, information related to a status of the sensor data, and information related to a type of the sensor data. The information related to the sensor data may be provided by an apparatus 20 as described subsequently, for example, or may be derived from the sensor data by a control module 14 as described subsequently.

The processing distribution unit 10 further comprises a control module 14 configured to dynamically assign, among the plurality of data processing units 400, computing resources for evaluating the sensor data based on the information related to the sensor data. In embodiments the control module 14 may be implemented using one or more processing units, one or more processing devices, any means for processing, such as a processor, a computer or a programmable hardware component being operable with accordingly adapted software. In other words, the described function of the control module 14 may as well be implemented in software, which is then executed on one or more programmable hardware components. Such hardware components may comprise a general purpose processor, a Digital Signal Processor (DSP), a micro-controller, etc. The interface is coupled to the control module 14. In embodiments, functions provided by the processing distribution unit 10 in the scope of the mobile communication system 300 as shown in Fig. 1 to Fig. 5 may be performed by the control module 14.

More details and aspects of the processing distribution unit 10 (e.g. mobile communication system 300, at least one radio access node 100, plurality of data processing units 400, at least one mobile sensor node 200, evaluation of sensor data, processing distribution unit 10, dynamic assignment, computing resources, sensor data, quantity, frequency, type, status of the sensor data, core network 302, radio access network 304, the least one first data processing unit 402, the least one second data processing unit 404, latency, local scope, sensor data evaluation decision information) are mentioned in connection with the proposed concept or one or more examples described above (e.g. Fig. 1 to 5). The processing distribution unit 10 may comprise one or more additional optional features corresponding to one or more aspects of the proposed concept or one or more examples described above or below.

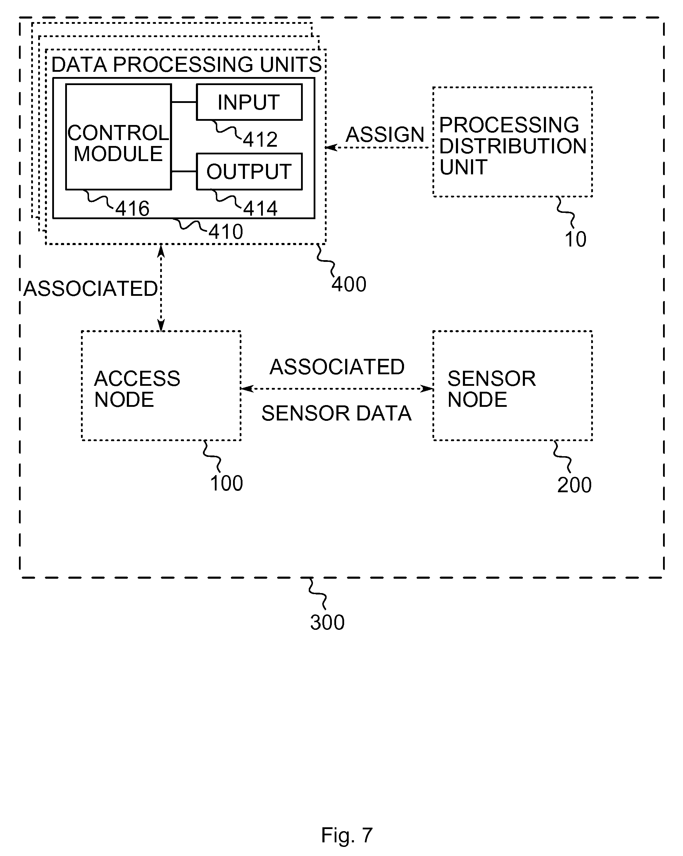

Fig. 7 illustrates a block diagram of an embodiment of a data processing unit 410 of a plurality of data processing units 400 for evaluating sensor data in a mobile communication system 300. The mobile communication system 300 further comprises at least one radio access node 100 associated with the plurality of data processing units 400. The mobile communication system comprises at least one mobile sensor node 200 associated with the at least one radio access node 100 and configured to provide sensor data to the associated radio access node. The mobile communication system further comprises the plurality of data processing units 400 to evaluate the sensor data. The data processing unit 410 comprises an input 412 configured to obtain the sensor data and at least one output 414. An input, e.g. the input 412 may correspond to an interface for receiving information, which may be in digital (bit) values according to a specified code, within a module, between modules or between modules of different entities. An output, e.g. of the at least one output 414, may correspond to an interface for transmitting information, which may be represented by digital (bit) values according to a specified code or protocol, within a module, between modules, or between modules of different entities. In at least some embodiments, the input may be configured to obtain the sensor data from the at least one access node 100 and/or from the at least one mobile sensor node 200, e.g. via a backhaul link of the mobile communication system 300.

The data processing unit 410 further comprises a control module 416 configured to evaluate the sensor data and to provide the evaluated sensor data using the at least one output 414. The data processing unit 410 is dynamically selected by a processing distribution unit 10 among the plurality of data processing units 400 to provide computing resources to evaluate the sensor data. Functions of the plurality of data processing unit 400 as described in Fig 1-6 may be performed by the data processing unit 410, e.g. using the control module 416. The control module 416 is coupled to the input 412 and the at least one output 416. In embodiments the control module 416 may be implemented using one or more processing units, one or more processing devices, any means for processing, such as a processor, a computer or a programmable hardware component being operable with accordingly adapted software. In other words, the described function of the control module 406 may as well be implemented in software, which is then executed on one or more programmable hardware components. Such hardware components may comprise a general purpose processor, a Digital Signal Processor (DSP), a micro-controller, etc.

More details and aspects of the data processing unit 410 (e.g. mobile communication system 300, at least one radio access node 100, plurality of data processing units 400, at least one mobile sensor node 200, evaluation of sensor data, processing distribution unit 10, dynamic assignment, computing resources, sensor data, quantity, frequency, type, status of the sensor data, core network 302, radio access network 304, the least one first data processing unit 402, the least one second data processing unit 404, latency, local scope, sensor data evaluation decision information) are mentioned in connection with the proposed concept or one or more examples described above (e.g. Fig. 1 to 6). The data processing unit 410 may comprise one or more additional optional features corresponding to one or more aspects of the proposed concept or one or more examples described above or below.

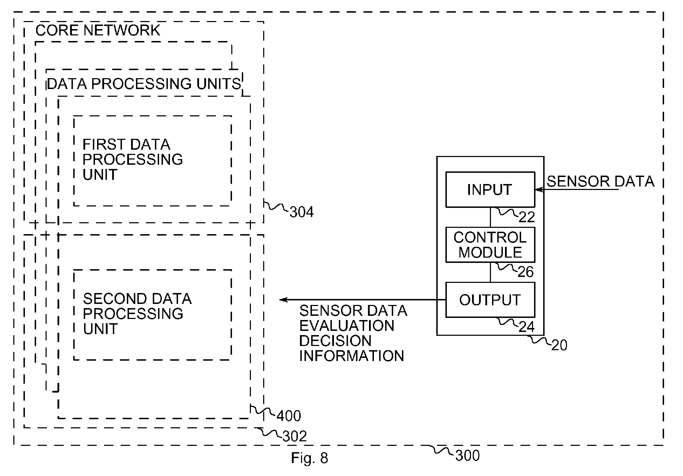

Fig. 8 illustrates a block diagram of an embodiment of an apparatus 20 for providing sensor data evaluation decision information. The apparatus 20 comprises an input 22, configured to obtain the sensor data and an output 24, configured to provide the sensor data evaluation decision information. An input, e.g. the input 22 may correspond to an interface for receiving information, which may be in digital (bit) values according to a specified code, within a module, between modules or between modules of different entities. An output, e.g. the output 24, may correspond to an interface for transmitting information, which may be represented by digital (bit) values according to a specified code or protocol, within a module, between modules, or between modules of different entities.

The apparatus 20 further comprises a control module 26 configured to determine the sensor data evaluation decision information. The sensor data evaluation decision information comprises decision information related to an evaluation of the sensor data by a at least one first data processing unit 402 comprised in a core network 302 of a mobile communication system 300 or by a at least one second data processing unit 404 comprised in a radio access network 304 of the mobile communication system 300. The control module 26 is configured to determine the sensor data evaluation decision information based on at least one element of the group of information related to a quantity of the sensor data, information related to a frequency of the sensor data, information related to a status of the sensor data, and information related to a type of the sensor data. The control module 26 is coupled to the input 24 and the output 26. In at least some embodiments, the apparatus 20 may be comprised in a processing distribution unit 10, a packet gateway 3002 or in other components of the mobile communication system, e.g. the at least one access node 100. The control module 26 may be configured to determine information related to the sensor data based on the sensor data evaluation decision information and provide the information related to the sensor data to the processing distribution unit 10.

In embodiments the control module 26 may be implemented using one or more processing units, one or more processing devices, any means for processing, such as a processor, a computer or a programmable hardware component being operable with accordingly adapted software. In other words, the described function of the control module 26 may as well be implemented in software, which is then executed on one or more programmable hardware components. Such hardware components may comprise a general purpose processor, a Digital Signal Processor (DSP), a micro-controller, etc.

More details and aspects of the apparatus 20 (e.g. mobile communication system 300, at least one radio access node 100, plurality of data processing units 400, at least one mobile sensor node 200, evaluation of sensor data, processing distribution unit 10, dynamic assignment, computing resources, sensor data, quantity, frequency, type, status of the sensor data, core network 302, radio access network 304, the least one first data processing unit 402, the least one second data processing unit 404, latency, local scope, sensor data evaluation decision information) are mentioned in connection with the proposed concept or one or more examples described above (e.g. Fig. 1 to 6). The apparatus 20 may comprise one or more additional optional features corresponding to one or more aspects of the proposed concept or one or more examples described above or below.

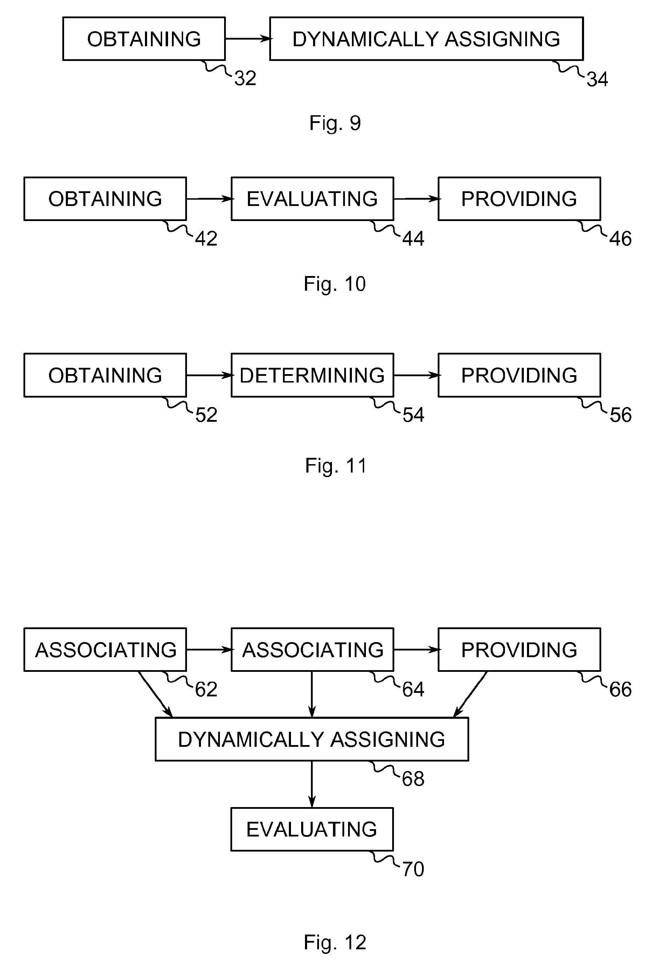

Fig. 9 shows a flowchart of an embodiment of a method for a mobile communication system 300. The mobile communication system 300 comprises at least one radio access node 100 associated with a plurality of data processing units 400. The mobile communication system 300 comprises at least one mobile sensor node 200 configured to provide sensor data to the associated radio access node. The mobile communication system 300 comprises the plurality of data processing units 400 to evaluate the sensor data. The method comprises obtaining 32 information related to the sensor data. The method further comprises dynamically assigning 34, among the plurality of data processing units 400, computing resources for evaluating the sensor data based on the information related to the sensor data.

Fig. 10 shows a flowchart of an embodiment of a method for a data processing unit 410 of a plurality of data processing units 400 for evaluating sensor data in a mobile communication system 300. The mobile communication system 300 further comprises at least one radio access node 100 associated with the plurality of data processing units 400. The mobile communication system 300 further comprises at least one mobile sensor node 200 associated with the at least one radio access node 100 and configured to provide sensor data to the associated radio access node. The mobile communication system 300 further comprises the plurality of data processing units 400 to evaluate the sensor data. The method comprises obtaining 42 the sensor data from the at least one mobile sensor node 200. The method further comprises evaluating 44 the sensor data. The method further comprises providing 46 the evaluated sensor data. The data processing unit 410 is dynamically selected by a processing distribution unit 10 among the plurality of data processing units 400 to provide computing resources to evaluate the sensor data.

Fig. 11 shows a flowchart of an embodiment of a method for providing sensor data evaluation decision information. The method comprises obtaining 52 the sensor data. The method further comprises determining 54 the sensor data evaluation decision information based on at least one element of the group of information related to a quantity of the sensor data, information related to a frequency of the sensor data, information related to a status of the sensor data, and information related to a type of the sensor data. The sensor data evaluation decision information comprises decision information related to an evaluation of the sensor data by a at least one first data processing unit 402 comprised in a core network 302 of a mobile communication system 300 or by a at least one second data processing unit 404 comprised in a radio access network 304 of the mobile communication system 300. The method further comprises providing 56 the sensor data evaluation decision information.

Fig. 12 shows a flowchart of an embodiment of a method for a mobile communication system 300. The method comprises associating 62 at least one radio access node 100 with a plurality of data processing units 400. The method further comprises associating 64 at least one mobile sensor node 200 with the at least one radio access node 100. The method further comprises providing 66 sensor data to the associated radio access node. The method further comprises dynamically assigning 68, among the plurality of data processing units 400, computing resources for evaluating the sensor data. The method further comprises evaluating 70 the sensor data.

A further embodiment is a computer program product comprising a computer readable medium having computer readable program code embodied therein, the computer readable program code being configured to implement one of the above methods when being loaded on a computer, a processor, or a programmable hardware component.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may provide in-network processing of sensor data and may support a dynamic and distributed placement of data processing units and intelligent network attachment. Thereby the processing between access nodes and back-end servers can be leveraged. This may enable a more efficient use of network resources, personal data protection and individual support of applications by considering their specific service requirements, e.g. low latencies.

Conventional mobile communication systems might not offer in-network processing of sensor data, there might be no compute resources available in the access nodes for application software and no processing distribution might take place.

Embodiments may enable in-network processing, a dynamic and distributed placement of computing resources and intelligent network attachment supporting application specific service requirements, e.g. low latencies, and furthermore personal data protection as pre-processing of data might be enabled using the at least one second data processing unit 404, e.g. comprised in the access node closest to the sensor node.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. Mobile communication system (300), comprising
at least one radio access node (100) associated with a plurality of data processing units (400),
at least one mobile sensor node (200) associated with the at least one radio access node (100) and configured to provide sensor data to the associated radio access node, wherein the plurality of data processing units (400) is configured to evaluate the sensor data; and
a processing distribution unit (10) configured to dynamically assign, among the plurality of data processing units (400), computing resources for evaluating the sensor data.

2. The mobile communication system (300) of claim 1, wherein the mobile communication system (300) comprises a core network (302) and a radio access network (304), and wherein the plurality of data processing units (400) comprises at least one first data processing unit (402) comprised in the core network (302) and at least one second data processing unit (404) comprised in the radio access network (304), wherein the processing distribution unit (10) is further configured to assign the computing resources by transferring the evaluation of the sensor data between the at least one first data processing unit (402) and the at least one second data processing unit (404).

3. The mobile communication system (300) of claim 1, wherein the processing distribution unit (10) is configured to determine routing information for the sensor data based on the assignment of the computing resources,
and/or wherein the processing distribution unit (10) is further configured to assign the computation resources based on at least one element of the group of information related to a quantity of the sensor data, information related to a frequency of the sensor data, information related to a status of the sensor data, and information related to a type of the sensor data,
and/or wherein the plurality of data processing units (400) is configured to anonymize and/or to aggregate the sensor data.

4. The mobile communication system (300) of claim 2, wherein the at least one second data processing unit (404) is configured to evaluate the sensor data to determine pre-processed sensor data, and wherein the at least one second data processing unit (404) is configured to forward the pre-processed sensor data to the at least one first data processing unit (402) for further processing.

5. The mobile communication system (300) of claim 2, wherein a latency between the at least one radio access node (100) and the at least one second data processing unit (404) is lower than a latency between the at least one radio access node (100) and the at least one first data processing unit (402), and wherein the processing distribution unit (10) is configured to assign the computing resources based on the latency between the at least one radio access node (100) and the at least one first data processing unit (402) and/or the at least one second data processing unit (404),
and/or wherein the processing distribution unit (10) is configured to dynamically assign the computing resources based on sensor data evaluation decision information comprised in the information related to the sensor data, wherein the sensor data evaluation decision information comprises decision information related to an evaluation of the sensor data by the at least one first data processing unit (402) or by the at least one second data processing unit (404),
and/or wherein the processing distribution unit (10) is configured to dynamically assign the computing resources based on a latency requirement of the sensor data and/or based on a local scope of the sensor data,
and/or wherein the processing distribution unit (10) is configured to dynamically assign the computing resources based on a load balancing of the processing resources used to evaluate the sensor data,
and/or wherein the at least one second data processing unit (404) is further configured to determine sensor response information based on the sensor data, and to provide the sensor response information to at least one node of the mobile communication system (300).

6. The mobile communication system (300) of claim 2, wherein the at least one mobile sensor node (200) is comprised in at least one vehicle, wherein the sensor data corresponds to at least one element of the group of movement data of the at least one vehicle, vehicle-to-vehicle distance data of the at least one vehicle, position data of the at least one vehicle, navigation data of the at least one vehicle, security assistance data of the at least one vehicle, and temperature data of the at least one vehicle, and wherein the plurality of data processing units (400) is configured to evaluate, analyze and/or aggregate the sensor data.

7. The mobile communication system (300) of claim 6, wherein the processing distribution unit (10) is configured to determine an increase in an amount of sensor data provided to one access node, and wherein the processing distribution unit (10) is configured to assign the at least one second data processing unit (404) to filter and/or aggregate the sensor data and provide the filtered and/or aggregated sensor data to the at least one first data processing unit (402) if the increased amount surpasses a threshold, wherein the at least one first data processing unit (402) is configured to determine information related to a traffic occurrence based on the filtered and/or aggregated sensor data, and wherein the at least one first data processing unit (402) is configured to provide traffic occurrence warning information to at least one node of the mobile communication system (300).

8. Processing distribution unit (10) for a mobile communication system (300), the mobile communication system (300) further comprising at least one radio access node (100) associated with a plurality of data processing units (400), at least one mobile sensor node (200) associated with the at least one radio access node (100) and configured to provide sensor data to the associated radio access node, and the plurality of data processing units (400) to evaluate the sensor data, the processing distribution unit (10) comprising
an interface (12), configured to obtain information related to the sensor data; and
a control module (14), configured to dynamically assign, among the plurality of data processing units (400), computing resources for evaluating the sensor data based on the information related to the sensor data.

9. Data processing unit (410) of a plurality of data processing units (400) for evaluating sensor data in a mobile communication system (300), the mobile communication system (300) further comprising at least one radio access node (100) associated with the plurality of data processing units (400), at least one mobile sensor node (200) associated with the at least one radio access node (100) and configured to provide sensor data to the associated radio access node, and the plurality of data processing units (400) to evaluate the sensor data, the data processing unit (410) comprising
an input (412) configured to obtain the sensor data,
at least one output (414),
a control module (416) configured to evaluate the sensor data and to provide the evaluated sensor data using the at least one output (414), wherein the data processing unit (410) is dynamically selected by a processing distribution unit (10) among the plurality of data processing units (400) to provide computing resources to evaluate the sensor data.

10. Apparatus (20) for providing sensor data evaluation decision information, the apparatus (20) comprising
an input (22), configured to obtain the sensor data,
an output (24), configured to provide the sensor data evaluation decision information, and
a control module (26), configured to determine the sensor data evaluation decision information, wherein the sensor data evaluation decision information comprises decision information related to an evaluation of the sensor data by a at least one first data processing unit (402) comprised in a core network (302) of a mobile communication system (300) or by a at least one second data processing unit (404) comprised in a radio access network (304) of the mobile communication system (300), and wherein the control module (26) is configured to determine the sensor data evaluation decision information based on at least one element of the group of information related to a quantity of the sensor data, information related to a frequency of the sensor data, information related to a status of the sensor data, and information related to a type of the sensor data.

11. Method for a mobile communication system (300), the mobile communication system (300) comprising at least one radio access node (100) associated with a plurality of data processing units (400), at least one mobile sensor node (200) configured to provide sensor data to the associated radio access node, and the plurality of data processing units (400) to evaluate the sensor data, the method comprising
obtaining (32) information related to the sensor data, and
dynamically assigning (34), among the plurality of data processing units (400), computing resources for evaluating the sensor data based on the information related to the sensor data.

12. Method for a data processing unit (410) of a plurality of data processing units (400) for evaluating sensor data in a mobile communication system (300), the mobile communication system (300) further comprising at least one radio access node (100) associated with the plurality of data processing units (400), at least one mobile sensor node (200) associated with the at least one radio access node (100) and configured to provide sensor data to the associated radio access node, and the plurality of data processing units (400) to evaluate the sensor data, the method comprising
obtaining (42) the sensor data from the at least one mobile sensor node (200), evaluating (44) the sensor data, and
providing (46) the evaluated sensor data, wherein the data processing unit (410) is dynamically selected by a processing distribution unit (10) among the plurality of data processing units (400) to provide computing resources to evaluate the sensor data.

13. Method for providing sensor data evaluation decision information, the method comprising
obtaining (52) the sensor data,
determining (54) the sensor data evaluation decision information based on at least one element of the group of information related to a quantity of the sensor data, information related to a frequency of the sensor data, information related to a status of the sensor data, and information related to a type of the sensor data, wherein the sensor data evaluation decision information comprises decision information related to an evaluation of the sensor data by a at least one first data processing unit (402) comprised in a core network (302) of a mobile communication system (300) or by a at least one second data processing unit (404) comprised in a radio access network (304) of the mobile communication system (300), and
providing (56) the sensor data evaluation decision information.

14. Method for a mobile communication system (300), the method comprising
associating (62) at least one radio access node (100) with a plurality of data processing units (400),
associating (64) at least one mobile sensor node (200) with the at least one radio access node (100)
providing (66) sensor data to the associated radio access node,
dynamically assigning (68), among the plurality of data processing units (400), computing resources for evaluating the sensor data, and
evaluating (70) the sensor data.

15. A computer program product comprising a computer readable medium having computer readable program code embodied therein, the computer readable program code being configured to implement any of the methods of claim 11, 12, 13, and 14, when being loaded on a computer, a processor, or a programmable hardware component.

## Amended claims

### Amended claims in accordance with Rule 137(2) EPC.

1. Mobile communication system (300), comprising
at least one radio access node (100) associated with a distributed plurality of data processing units (400),
at least one mobile sensor node (200) associated with the at least one radio access node (100) and configured to provide sensor data to the associated radio access node, wherein the plurality of data processing units (400) is configured to evaluate the sensor data; and
a processing distribution unit (10) configured to dynamically assign, among the plurality of data processing units (400), computing resources for evaluating the sensor data.

2. The mobile communication system (300) of claim 1, wherein the mobile communication system (300) comprises a core network (302) and a radio access network (304), and wherein the plurality of data processing units (400) comprises at least one first data processing unit (402) comprised in the core network (302) and at least one second data processing unit (404) comprised in the radio access network (304), wherein the processing distribution unit (10) is further configured to assign the computing resources by transferring the evaluation of the sensor data between the at least one first data processing unit (402) and the at least one second data processing unit (404).

3. The mobile communication system (300) of claim 1, wherein the processing distribution unit (10) is configured to determine routing information for the sensor data based on the assignment of the computing resources,
and/or wherein the processing distribution unit (10) is further configured to assign the computation resources based on at least one element of the group of information related to a quantity of the sensor data, information related to a frequency of the sensor data, information related to a status of the sensor data, and information related to a type of the sensor data,
and/or wherein the plurality of data processing units (400) is configured to anonymize and/or to aggregate the sensor data.

4. The mobile communication system (300) of claim 2, wherein the at least one second data processing unit (404) is configured to evaluate the sensor data to determine preprocessed sensor data, and wherein the at least one second data processing unit (404) is configured to forward the pre-processed sensor data to the at least one first data processing unit (402) for further processing.

5. The mobile communication system (300) of claim 2, wherein a latency between the at least one radio access node (100) and the at least one second data processing unit (404) is lower than a latency between the at least one radio access node (100) and the at least one first data processing unit (402), and wherein the processing distribution unit (10) is configured to assign the computing resources based on the latency between the at least one radio access node (100) and the at least one first data processing unit (402) and/or the at least one second data processing unit (404),
and/or wherein the processing distribution unit (10) is configured to dynamically assign the computing resources based on sensor data evaluation decision information comprised in the information related to the sensor data, wherein the sensor data evaluation decision information comprises decision information related to an evaluation of the sensor data by the at least one first data processing unit (402) or by the at least one second data processing unit (404),
and/or wherein the processing distribution unit (10) is configured to dynamically assign the computing resources based on a latency requirement of the sensor data and/or based on a local scope of the sensor data,
and/or wherein the processing distribution unit (10) is configured to dynamically assign the computing resources based on a load balancing of the processing resources used to evaluate the sensor data,
and/or wherein the at least one second data processing unit (404) is further configured to determine sensor response information based on the sensor data, and to provide the sensor response information to at least one node of the mobile communication system (300).

6. The mobile communication system (300) of claim 2, wherein the at least one mobile sensor node (200) is comprised in at least one vehicle, wherein the sensor data corresponds to at least one element of the group of movement data of the at least one vehicle, vehicle-to-vehicle distance data of the at least one vehicle, position data of the at least one vehicle, navigation data of the at least one vehicle, security assistance data of the at least one vehicle, and temperature data of the at least one vehicle, and wherein the plurality of data processing units (400) is configured to evaluate, analyze and/or aggregate the sensor data.

7. The mobile communication system (300) of claim 6, wherein the processing distribution unit (10) is configured to determine an increase in an amount of sensor data provided to one access node, and wherein the processing distribution unit (10) is configured to assign the at least one second data processing unit (404) to filter and/or aggregate the sensor data and provide the filtered and/or aggregated sensor data to the at least one first data processing unit (402) if the increased amount surpasses a threshold, wherein the at least one first data processing unit (402) is configured to determine information related to a traffic occurrence based on the filtered and/or aggregated sensor data, and wherein the at least one first data processing unit (402) is configured to provide traffic occurrence warning information to at least one node of the mobile communication system (300).

8. Processing distribution unit (10) for a mobile communication system (300), the mobile communication system (300) further comprising at least one radio access node (100) associated with a distributed plurality of data processing units (400), at least one mobile sensor node (200) associated with the at least one radio access node (100) and configured to provide sensor data to the associated radio access node, and the plurality of data processing units (400) to evaluate the sensor data, the processing distribution unit (10) comprising
an interface (12), configured to obtain information related to the sensor data; and
a control module (14), configured to dynamically assign, among the plurality of data processing units (400), computing resources for evaluating the sensor data based on the information related to the sensor data.

9. Data processing unit (410) of a distributed plurality of data processing units (400) for evaluating sensor data in a mobile communication system (300), the mobile communication system (300) further comprising at least one radio access node (100) associated with the plurality of data processing units (400), at least one mobile sensor node (200) associated with the at least one radio access node (100) and configured to provide sensor data to the associated radio access node, and the plurality of data processing units (400) to evaluate the sensor data, the data processing unit (410) comprising
an input (412) configured to obtain the sensor data,
at least one output (414),
a control module (416) configured to evaluate the sensor data and to provide the evaluated sensor data using the at least one output (414), wherein the data processing unit (410) is dynamically selected by a processing distribution unit (10) among the plurality of data processing units (400) to provide computing resources to evaluate the sensor data.

10. Apparatus (20) for providing sensor data evaluation decision information, the apparatus (20) comprising
an input (22), configured to obtain the sensor data,
an output (24), configured to provide the sensor data evaluation decision information, and
a control module (26), configured to determine the sensor data evaluation decision information, wherein the sensor data evaluation decision information comprises decision information related to an evaluation of the sensor data by a at least one first data processing unit (402) comprised in a core network (302) of a mobile communication system (300) or by a at least one second data processing unit (404) comprised in a radio access network (304) of the mobile communication system (300), and wherein the control module (26) is configured to determine the sensor data evaluation decision information based on at least one element of the group of information related to a quantity of the sensor data, information related to a frequency of the sensor data, information related to a status of the sensor data, and information related to a type of the sensor data.

11. Method for a mobile communication system (300), the mobile communication system (300) comprising at least one radio access node (100) associated with a distributed plurality of data processing units (400), at least one mobile sensor node (200) configured to provide sensor data to the associated radio access node, and the plurality of data processing units (400) to evaluate the sensor data, the method comprising obtaining (32) information related to the sensor data, and
dynamically assigning (34), among the plurality of data processing units (400), computing resources for evaluating the sensor data based on the information related to the sensor data.

12. Method for a data processing unit (410) of a distributed plurality of data processing units (400) for evaluating sensor data in a mobile communication system (300), the mobile communication system (300) further comprising at least one radio access node (100) associated with the plurality of data processing units (400), at least one mobile sensor node (200) associated with the at least one radio access node (100) and configured to provide sensor data to the associated radio access node, and the plurality of data processing units (400) to evaluate the sensor data, the method comprising
obtaining (42) the sensor data from the at least one mobile sensor node (200), evaluating (44) the sensor data, and
providing (46) the evaluated sensor data, wherein the data processing unit (410) is dynamically selected by a processing distribution unit (10) among the plurality of data processing units (400) to provide computing resources to evaluate the sensor data.

13. Method for providing sensor data evaluation decision information, the method comprising
obtaining (52) the sensor data,
determining (54) the sensor data evaluation decision information based on at least one element of the group of information related to a quantity of the sensor data, information related to a frequency of the sensor data, information related to a status of the sensor data, and information related to a type of the sensor data, wherein the sensor data evaluation decision information comprises decision information related to an evaluation of the sensor data by a at least one first data processing unit (402) comprised in a core network (302) of a mobile communication system (300) or by a at least one second data processing unit (404) comprised in a radio access network (304) of the mobile communication system (300), and
providing (56) the sensor data evaluation decision information.

14. Method for a mobile communication system (300), the method comprising associating (62) at least one radio access node (100) with a distributed plurality of data processing units (400),
associating (64) at least one mobile sensor node (200) with the at least one radio access node (100)
providing (66) sensor data to the associated radio access node,
dynamically assigning (68), among the plurality of data processing units (400), computing resources for evaluating the sensor data, and
evaluating (70) the sensor data.

15. A computer program product comprising a computer readable medium having computer readable program code embodied therein, the computer readable program code being configured to implement any of the methods of claim 11, 12, 13, and 14, when being loaded on a computer, a processor, or a programmable hardware component.
